Europäisches Patentamt

European Patent Office

Office européen des brevets

(11) Publication number: **0 190 046**
**A2**

(12) **EUROPEAN PATENT APPLICATION**

(21) Application number: **86300627.6**

(22) Date of filing: **30.01.86**

(51) Int. Cl.⁴: **B 60 S 9/04**

(30) Priority: **30.01.85 GB 8502342**

(43) Date of publication of application:
**06.08.86 Bulletin 86/32**

(84) Designated Contracting States:
**BE DE FR GB IT NL SE**

(71) Applicant: **Trigg, Brian**
**Greenwood Falls Farm Hill Lane Huthwaite**
**Sutton-in-Ashfield Nottinghamshire(GB)**

(72) Inventor: **Trigg, Brian**
**Greenwood Falls Farm Hill Lane Huthwaite**
**Sutton-in-Ashfield Nottinghamshire(GB)**

(74) Representative: **Campbell, Iain Angus et al,**
**Swindell & Pearson 44 Friar Gate**
**Derby DE1 1DA(GB)**

(54) Improvements in or relating to support structures.

(57) A support structure or landing heel, especially but not exclusively intended to provide a parking support for a trailer, includes a pivotally mounted strut and a tie member one end of which is pivotally mounted to the strut, the other end of which is movable between two positions and fixable in said positions, the first of said positions being such that the tie holds the strut in a lowered attitude, the second being such that the tie holds the strut in a raised attitude.

Fig 1

EP 0 190 046 A2

Improvements in or Relating to Support Structures

The present invention concerns improvements in or relating to support structures, especially but not exclusively retractable support structures for vehicles, particularly trailers.

Most trailers, for example two-wheeled trailers, require to be fitted with a support structure or landing heel on their tow bar so that the trailer can stand with its longitudinal axis close to horizontal when it is not attached to a towing vehicle.

The most simple prior support arrangement has comprised a fixed landing heel mounted under the tow bar and adapted to come into ground engagement when the trailer is unhitched and its front end is slightly lowered from the normal towing position. This arrangement is disadvantageous, especially with agricultural trailers, as the lower end of the landing heel has only limited ground clearance when the trailer is being towed and consequently can cause damage to growing crops, straw swathes, potato drills, etc.

A further prior proposal has overcome the disadvantage of the fixed landing heel by providing a landing heel which can be raised when it is in a non-supporting condition but this has had the disadvantage that in the raised condition those portions of the structure of the heel above the towing assembly have interfered with other apparatus, for
example linkage arms on the towing vehicle, its power
take-off shafts or the trailer service lines.

It is an object of the present invention to
obviate or mitigate these disadvantages.

According to the present invention there is
provided a support structure comprising a support strut
adapted for pivotal mounting about a first axis on the
underside of a member to be supported and a tie
pivotally mounted to said support strut about a second
axis at a location on the strut spaced from the first
axis and means on the tie spaced from said second axis
for fixing the tie relative to the member optionally in
one of two positions in which the strut is respectively
lowered away from and raised close to or against the
member.

Preferably the tie is pivotally mounted to the
free end of the strut, and has said fixing means at its
free end.  Preferably a ground engaging foot is
pivotally mounted to the free end of the strut.
Preferably said fixing means on the tie comprises a
link pivotally mounted to the tie and adapted for
pivotal mounting on the member about a third axis
located between said two positions.  The link may
extent beyond said third axis to provide an operating handle.

An embodiment of the present invention will now be described by way of example only with reference to the accompanying drawings, in which:-

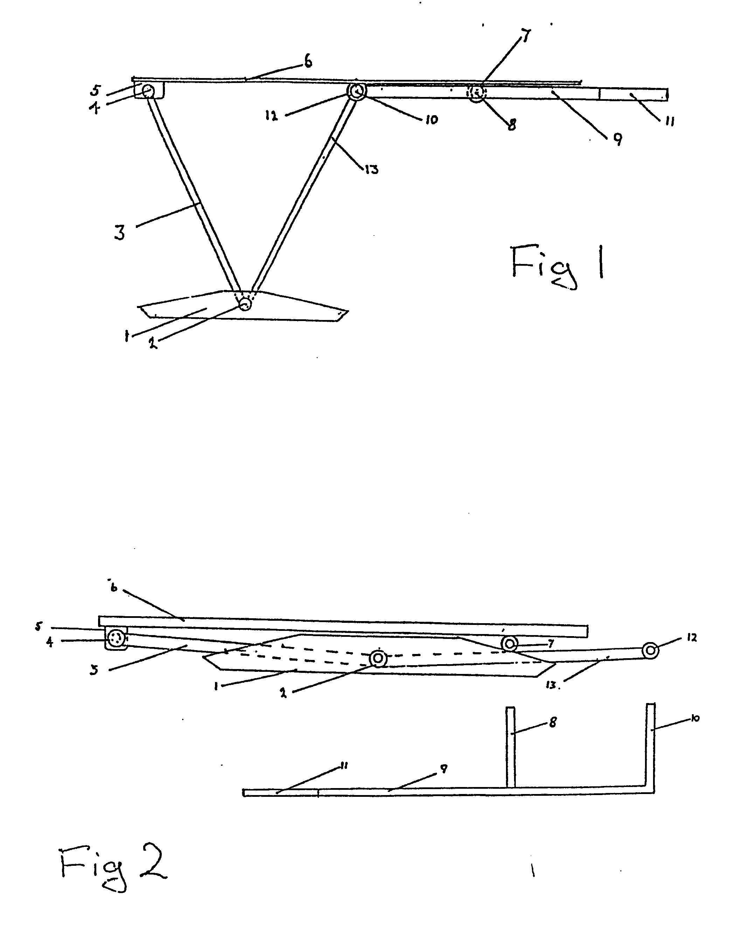

Fig. 1 shows an elevation of a support structure in a ground engaging position; and

Fig. 2 shows a similar view of the structure in the raised position with a link thereof removed and illustrated in plan.

A support structure or landing heel for a trailer comprises a mounting plate 6 adapted for attachment to the trailer at a suitable point on the underside of its towing linkage or front chassis. In a modification where the landing heel of the invention is permanently fixed to the trailer the towing hitch or chassis may form the member 6.

A pair of spaced lugs 5 project downwardly from the undersurface of the member 6 and support a suitable bearing 4 for a strut 3 which has pivotally attached to its lower end about a first axis 2 a ground engaging foot 1 and one end of a tie 13, the other end of which is pivotally engaged with one end of a link 9 by a bearing member 10 projecting transversely of the link which is rotatably accommodated in a bush 12 fixed to the other end of tie 13. A further bush 7 is fixed to the underside of the structure 6 and accommodates another bearing member 8 projecting transversely from approximately the centre of the link 9, the link 9 at its free end extending into an operating handle 11.

In operation with the landing heel in its lower ground engaging position upward forces are transmitted to the underside of the member 6 by the strut 3 and the tie 13, the forces from the tie being transmitted through the bush 12 which is abutting the undersurface of the member 6 and is being restrained against lateral movement by the link 9.

To retract the landing heel the handle 11 of the link 9 is pivotted about the bush 7 in the anti-clockwise direction as viewed in the drawings, thereby causing the bush 12 and as a result the end of the tie 13 to describe an arc in an anti-clockwise direction on the underside of the member 6 until the bush again abuts the underside of said member at a second position on the side of the bush 7 remote from its first, starting position. The landing heel now occupies its raised position with the foot 1 well above ground level and no part of it above the level of the member 6.

To ensure that the arrangement remains in its raised position means may be provided on the member 6

- 5 -

0190046

for holding down the end of the handle 11 of the linkage 9.

Various modifications can be made without departing from the scope of the invention, for example alternative means may be provided for moving the said other end of the tie 13 from its first position to its second position. Such means may, for example, comprise a slot extending parallel to the underside of the member 6 and having an upwardly directed extension at its end adjacent the first pivot axis 4 and a downwardly directed extension at its other end. With such a modification no pivotal link 9 is required and all that is needed to move the assembly from the ground engaging position to the retracted position is to lift the forward end of the trailer to dislodge a protrusion on the said other end of the tie 13 from the upwardly directed extension of the slot, move the prostrusion along the slot and allow it to fall into the downwardly directed extension in which condition the landing heel will be retained in the raised condition.

It is clear that various other mechanical modifications can be envisaged within the scope of the main claim of the invention and further modifications to the geometric configuration of the strut and tie can be contemplated, for example the tie need not be pivotted to the lower end of the strut but could be pivotted to some point intermediate its ends.

0190046

## Claims:

1.  A support structure characterised in that it comprises a support strut (3) adapted for pivotal mounting about a first axis (4) on the underside of a member (6) to be supported and a tie (13) pivotally mounted to said support strut about a second axis (2) at a location on the strut spaced from the first axis and means (7 - 12) on the tie spaced from said second axis for fixing the tie relative to the member (6) optionally in one of two positions in which the strut is respectively lowered away from and raised close to or against the member.

2.  A structure as claimed in claim 1, characterised in that the tie (13) is pivotally mounted to the free end of the strut (3) and has said fixing means (12) at its free end.

3.  A structure as claimed in claim 1 or claim 2, characterised in that a ground engaging foot (1) is pivotally mounted to the free end of the strut (3).

4.  A structure as claimed in any of claims 1 to 3, characterised in that said fixing means on the tie comprises a link (9) pivotally mounted to the tie and adapted for pivotal mounting on the member (6) about a third axis (8) located between said two positions.

0190046

5.    A structure as claimed in claim 5, characterised in that the link (9) extends beyond said third axis (8) to provide an operating handle (11).

0190046

Fig 1

Fig 2